Europäisches Patentamt

European Patent Office

Office européen des brevets

(19)

(11) Numéro de publication: **0 221 408 B1**

(12) **FASCICULE DE BREVET EUROPEEN**

(45) Date de publication du fascicule du brevet:
06.09.89

(51) Int. Cl.⁴: **B 65 G 57/22**

(21) Numéro de dépôt: **86114280.0**

(22) Date de dépôt: **15.10.86**

(54) **Palettiseur pour charges diversifiées.**

(30) Priorité: **21.10.85 FR 8515632**

(43) Date de publication de la demande:
**13.05.87 Bulletin 87/20**

(45) Mention de la délivrance du brevet:
**06.09.89 Bulletin 89/36**

(84) Etats contractants désignés:
**CH DE ES FR IT LI NL**

(56) Documents cités:
**EP-A- 0 149 926**
**FR-A- 2 523 558**
**US-A- 3 901 391**
**US-A- 4 439 084**

(73) Titulaire: **COMPAGNIE GENERALE D'AUTOMATISME
CGA-HBS Société Anonyme dite, 12, rue de la Baume,
F-75008 PARIS (FR)**

(72) Inventeur: **Devic, Jean-Noel, 40, Le Hameau de la Viale
Cornas, F-07130 Saint Peray (FR)**
Inventeur: **Pommaret, Thierry, 49, rue Descartes,
F-26800 Portes Les Valence (FR)**
Inventeur: **Vivant, Robert, Route de Crest,
F-26120 Chabeuil (FR)**

(74) Mandataire: **Weinmiller, Jürgen et al,
Lennéstrasse 9 Postfach 24, D-8133 Feldafing (DE)**

ACTORUM AG

## Description

La présente invention concerne un palettiseur pour charges diversifiées, permettant la constitution de charges palettisées de caractéristiques dimensionnelles variables.

D'une manière générale, les appareils à palettiser confectionnent des charges palettisées composées couche après couche à partir d'articles unitaires. Les articles unitaires sont acheminés jusqu'à l'appareil, en alignement pouvant n'être que sur l'un de leurs bords et selon un agencement défini dans chaque rangée. Ils sont alors transférés sur une surface horizontale de chargement. Lorsqu'une couche est complète, elle est déposée sur une palette vide ou en cours de chargement. Ces opérations sont répétées jusqu'à chargement complet de la palette.

Lorsque les articles à traiter sont de caractéristiques dimensionnelles différentes, les rangées d'articles à transférer, les couches d'articles confectionnées et les charges palettisées confectionnées sont elles-mêmes différentes. Le traitement d'articles différents nécessite alors des interventions manuelles de réglage des palettiseurs existants, pour les adapter aux caractéristiques de chaque lot d'articles ou de chaque couche et de chaque charge palettisée à confectionner.

La présente invention a pour but de répondre à ces exigences.

Par rapport à l'état de la technique, représenté par exemple par le document EP-A-149 926 qui décrit un palettiseur pour confectionner sur une palette une charge à plusieurs couches d'articles, lesdits articles arrivant agencés selon des rangées successives de composition de chaque couche à un poste d'entrée, comportant un bâti vertical portant un cadre horizontal allongé monté mobile verticalement sur ledit bâti, une surface de chargement, dite nacelle, destinée à recevoir une couche d'articles, portée par ledit cadre et montée mobile horizontalement selon la longueur dudit cadre entre ledit poste d'entrée et ladite palette, des premiers moyens d'entraînement en translation verticale dudit cadre et des seconds moyens d'entraînement en translation horizontale de ladite nacelle, pour le positionnement de la nacelle à charger à proximité du poste d'entrée et le positionnement de la nacelle à décharger au-dessus de la palette, et comportant, en outre, des premiers moyens de transfert des articles du poste d'entrée sur la nacelle et des seconds moyens de transfert de la couche d'articles de la nacelle sur la palette, la présente invention est caractérisée en ce que lesdits premiers et seconds moyens de transfert sont constitués par un poussoir unique porté par ledit cadre horizontal et ainsi rendu solidaire en translation verticale de la nacelle et monté mobile en translation horizontale selon la longueur dudit cadre et en ce qu'il comporte, en outre, des troisièmes moyens d'entraînement en translation horizontale dudit poussoir, qui lui sont propres, commandés pour que le poussoir, d'une part, balaye au moins ledit poste d'entrée lors du chargement de la nacelle et d'autre part forme butée de retenue lors du déchargement de la nacelle.

Selon une autre caractéristique ladite nacelle et ledit poussoir coulissent entre deux branches profilées en U à ailes rentrantes d'un cadre porteur, le poussoir portant sur les ailes intérieures et la nacelle sur les ailes extérieures desdites branches.

Dans le palettiseur selon l'invention, les moyens d'entraînement en translation horizontale dudit poussoir sont à course variable et programmée.

Les caractéristiques et avantages de la présente invention apparaîtront au cours de la description donnée ci-après d'un exemple de réalisation illustré dans les dessins ci-annexés.

Dans ces dessins:

la fig. 1 est une vue en perspective schématique du palettiseur selon l'invention,

la fig. 2 est une vue en coupe selon ligne II-II de la figure 1,

la fig. 3 est une vue schématique de dessus de la structure porteuse,

la fig. 4 est une vue schématique de face de la structure porteuse,

la fig. 5 est une vue schématique de dessus illustrant l'un des chariots de guidage du palettiseur,

la fig. 6 est une vue de dessus schématique du convoyeur d'entrée du palettiseur,

la fig. 7 représente sous forme de schémas simplifiés les séquences de fonctionnement du palettiseur selon la présente invention,

les figures 8 à 11 représentent des exemples de constitution de couches d'articles composant une charge palettisée.

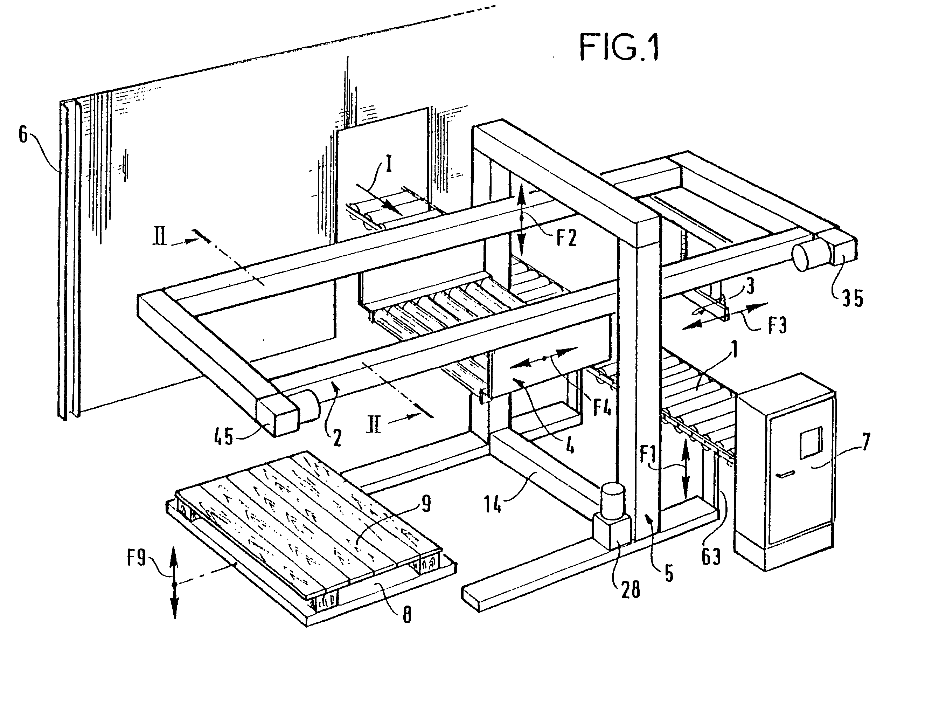

En regard de la figure 1, on voit que le palettiseur comporte:

un poste d'entrée 1, ou convoyeur d'entrée,

un cadre horizontal 2 portant un poussoir 3 et une nacelle 4,

un bâti vertical 5 en forme de portique portant le cadre porteur horizontal 2 et reposant au sol,

une protection périphérique, dont seule une paroi arrière 6 est illustrée, présentant des fenêtres convenables non représentées, en particulier d'accès des articles au poste d'entrée,

une armoire de commande programmée 7, montée sur la face avant du palettiseur à l'extérieur de la protection périphérique, regroupant les éléments de commande et de contrôle du palettiseur et,

dans l'enceinte protégée du palettiseur, à l'opposé du poste d'entrée, un piètement, ou socle 8, supportant une palette 9 sur laquelle va être constituée une charge palettisée. Des fenêtres ou des panneaux mobiles dans la protection 6 permettent l'introduction de la palette vide et l'évacuation de la charge palettisée.

Dans la figure 1, on a illustré par différentes flèches les mouvements des parties du palettiseur. Ces flèches sont désignées par la lettre F affectée de la référence de la partie concernée du palettiseur, la flèche I sur le poste d'entrée indique le sens d'introduction des articles sur le poste d'entrée 1.

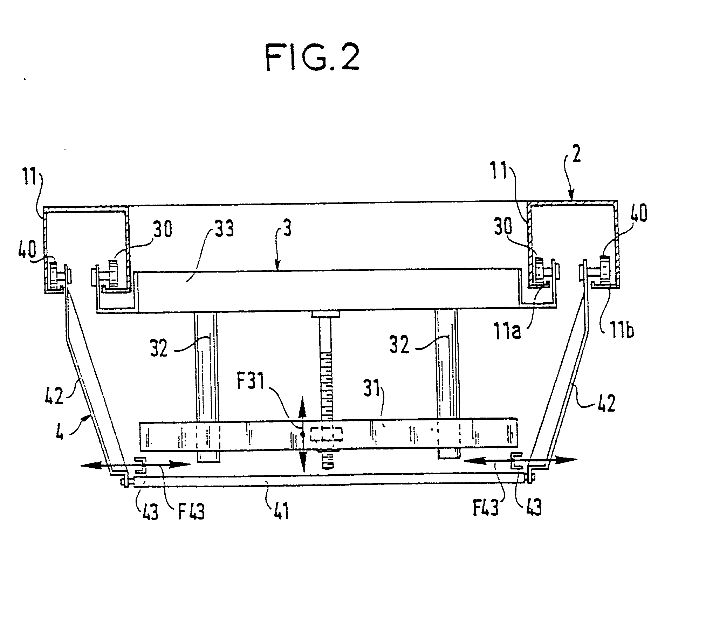

En regard de cette figure 1, mais plus particulièrement de la figure 2, on voit que le poussoir 3 et la nacelle 4 sont montés pour coulisser entre les branches longitudinales 11 du cadre horizontal 2. Chacune de ces branches est profilée en U renversé à ailes rentrantes 11a et 11b.

La nacelle 4 porte sur les ailes extérieures 11b des branches par des galets de guidage 40. Le poussoir 3 porte sur les ailes intérieures 11a de ces branches, par des galets de guidage 30.

La nacelle 4 est à surface de chargement horizontale 41, définie par une plage de rouleaux entre deux flasques latéraux 42, à l'extrémité desquels sont montés les galets 40. Cette nacelle 4 est équipée de deux butées latérales 43. Ces butées sont montées réglables indépendamment l'une de l'autre sur un guide parallèle aux rouleaux de la surface de chargement, pour ajuster leur écartement sur la surface de chargement à la dimension correspondante de la charge à palettiser.

Les réglages des butées, simples à réaliser, peuvent être manuels. Ils peuvent aussi être automatiques à partir d'une logique appropriée de commande contenue dans l'armoire 7. Ils sont simplement illustrés par les flèches F 43 chacune relative à l'une des butées.

Le poussoir 3 est constitué par une plaque basse 31 montée réglable en hauteur le long de montants tubulaires 32. Ces montants sont solidaires d'une traverse haute portante 33 ayant à ses extrémités les galets de guidage 30.

Le réglage de la plaque basse 31 permet de la «centrer» à mi-hauteur de la couche d'articles à constituer sur la nacelle 4 et ensuite à transférer de la nacelle. Ce réglage simple à réaliser peut être réalisé manuellement, par vis de réglage plus ou moins engagées dans les montants tubulaires 32, ou de manière automatique à partir d'une commande appropriée issue de l'armoire de commande 7. Il est simplement illustré par la flèche F 31.

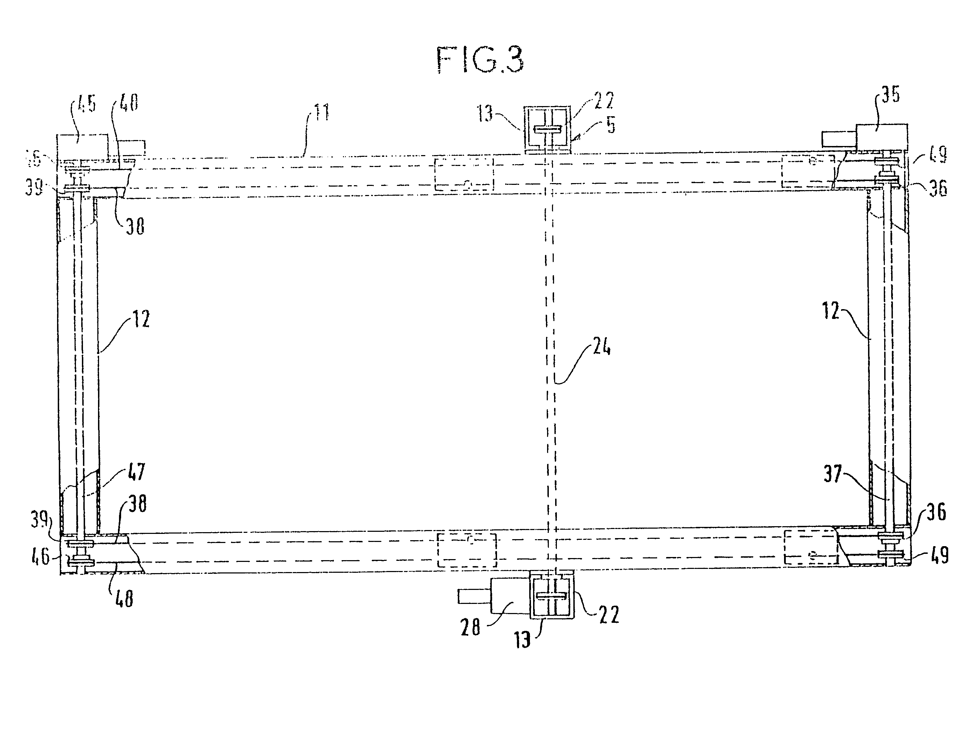

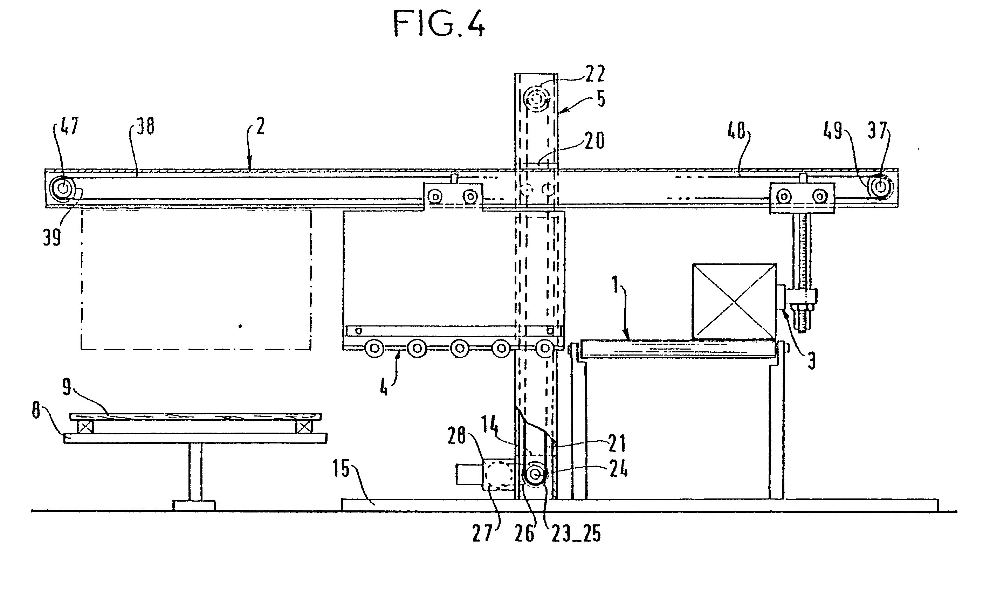

Les figures 3 et 4 illustrent les cinématiques de la nacelle 4 et du poussoir 3. Elles sont intégrées dans les branches longitudinales 11 du cadre porteur horizontal 2, en ce qui concerne les mouvements en translation horizontale rendus indépendants de la nacelle 4 et du poussoir 3, et dans les montants verticaux 13 du bâti 3 en ce qui concerne leur déplacement vertical simultané.

Ainsi, sur la figure 3, on voit que le cadre porteur 3 porte extérieurement sur l'une de ses branches longitudinales 11, à l'une des extrémités de cette branche un moteur 35, ou motoréducteur, d'entraînement du poussoir 3 et, à l'autre extrémité, un moteur analogue 45 d'entraînement de la nacelle 4. Chacun de ces moteurs entraîne deux pignons moteurs, 36 pour le poussoir 3, 46 pour la nacelle 4. Les pignons moteurs 36 aux extrémités correspondantes des deux branches 11 sont couplés par un arbre 37 interne à l'une des traverses 12 liant les branches 11. Les pignons moteurs 46 sont couplés par un autre arbre de transmission 47 interne à l'autre traverse 12 correspondante. Deux chaînes de transmission 38 et 48, auxquelles sont reliées le poussoir et la nacelle respectivement, sont tendues dans l'une et l'autre des branches 11, respectivement, entre les pignons moteurs 36 et 46 et des pignons de renvoi correspondants 39 et 49. Ces deux chaînes sont décalées l'une de l'autre dans chacune des branches; elles entraînent l'une le poussoir l'autre la nacelle.

Le poussoir et la nacelle, à moyen d'entraînement horizontal qui leur est individuel, sont par contre entraînés simultanément en translation verticale. Leur cadre porteur 2, sur la partie centrale de ses branches 11, est rendu coulissant sur le bâti vertical 2.

La figure 4 montre le bâti vertical 2 dont chacun des montants verticaux 13 contient un chariot 20 lié au cadre horizontal 2. Ces chariots sont eux-mêmes, dans les montants 13, chacun lié à une chaîne 21 tendue entre deux pignons terminaux 22, 23. Dans l'un et l'autre des montants 13, l'un de ces pignons est entraîné par un arbre 24 interne à une traverse horizontale basse 14 entre ces montants 13. Cet arbre 24 reçoit son mouvement moteur d'un pignon 25 entraîné par une chaîne de motorisation 26 tendue dans un socle d'assise 15 entre le pignon 25 et un pignon 27 couplé à un moteur, ou motoréducteur 28.

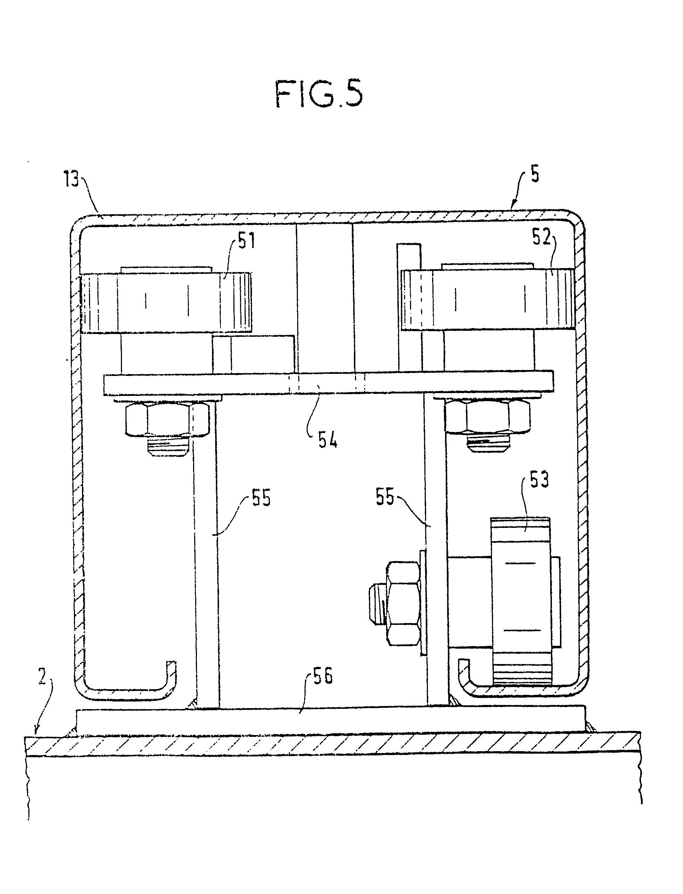

La figure 5 montre, à échelle agrandie par rapport aux figures précédentes, une section de l'un des montants verticaux 13. Les branches longitudinales 11 du cadre porteur horizontal 3 sont analogues.

Ce montant est profilé en U à ailes rentrantes. Le chariot interne à ce montant est constitué par trois galets 51, 52 et 53. Deux de ces galets 51 et 52 couplés par une plaque de liaison 54 portent sur les branches du U, au voisinage de sa base; le troisième galet 53 porte sur l'une des ailes terminales du U. Deux plaques entretoises 55, dont l'une est couplée au galet 53, relient la plaque 54 à une plaque 56 de fixation du chariot résultant au cadre porteur horizontal 2, au niveau de la partie médiane de chacune de ses branches longitudinales.

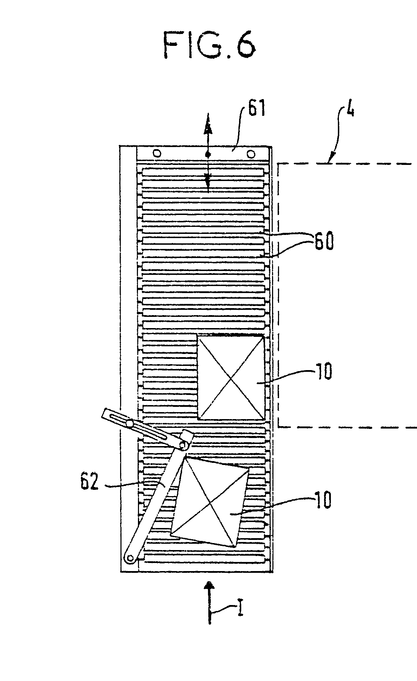

Dans la figure 6 on a illustré le poste d'entrée 1. Il comporte:

une plage à rouleaux motorisés 60 pour l'amenée des articles selon la flèche I,

une butée arrière 61, réglable manuellement ou de manière automatique à partir d'une commande délivrée par l'armoire 7 (figure 1),

une barrière de déviation 62, dont l'angle d'ouverture varie avec la dimension des articles.

La butée réglable est ajustée en positionnement en fonction de la profondeur de la charge palettisée à confectionner. La barrière de déviation 62 permet d'aligner les articles sensiblement sur le bord du poste d'entrée faisant face à la nacelle. La course du poussoir sera ainsi en conséquence réduite.

En regard de la figure 1, on voit que ces éléments du poste d'entrée 1 sont supportés par des pieds 63, réglables selon la flèche F1.

Ces pieds permettent d'ajuster le niveau du poste d'entrée du palettiseur au niveau d'un convoyeur, ou du moyen d'amenée des articles d'une chaîne existante.

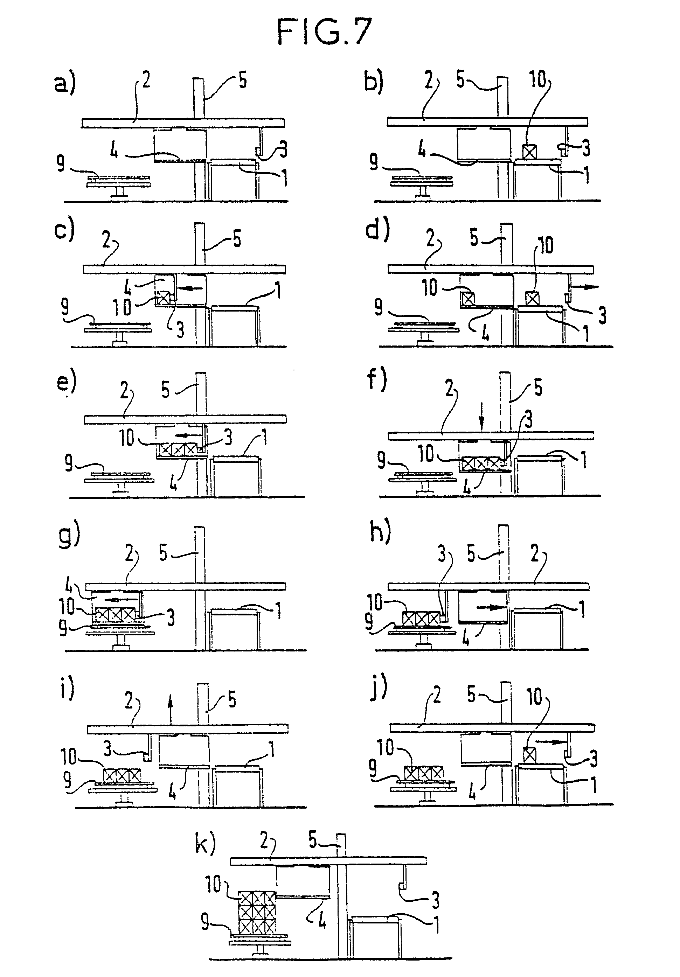

Le fonctionnement du palettiseur est donné en regard de la figure 7. Les étapes successives du fonctionnement correspondent aux schémas de cette figure.

Le schéma a donne l'état initial du palettiseur. Le poussoir 3 et la nacelle 4 sont de part et d'autre du poste d'entrée 1. La nacelle a sa surface de chargement au niveau du poste d'entrée. Le poussoir est juste au dessus du niveau du poste d'entrée et dans sa position maximale arrière. Le poussoir est ajusté en niveau et en course maximale arrière par rapport au bord correspondant du poste 1 en fonction des caractéristiques dimensionnelles des rangées d'articles à traiter.

Le schéma b montre l'étape d'introduction des articles sur le poste d'entrée. Les articles arrivent organisés selon la rangée voulue allant former une couche d'articles de la charge palettisée à confectionner. L'agencement relatif des articles est effectué en amont du poste d'entrée, de manière connue.

Le schéma c montre le transfert de la rangée d'articles du poste d'entrée à la nacelle, réalisé par le poussoir, la rangée d'articles est transférée à sa place sur la nacelle.

Le schéma d montre le retour du poussoir en position arrière définie.

Les étapes selon les schémas b à d se répètent autant de fois qu'il y a de rangées d'articles dans une couche complète d'articles, à l'exception de l'étape selon le schéma d lorsque la dernière rangée d'articles vient d'être transférée sur la nacelle et que la couche constituée est complète.

Le schéma e montre la couche d'articles complète sur la nacelle et le poussoir maintenu en position finale de transfert d'articles du poste d'entrée à la nacelle.

Le schéma f montre le transfert vertical simultané de la nacelle et du poussoir jusqu'au niveau de dépose de la couche d'articles sur la palette 9.

Le schéma g montre que la nacelle et le poussoir sont simultanément transférés horizontalement au dessus du niveau de dépose de la couche d'articles sur la palette.

Le schéma h montre la fin de l'étape de transfert de la couche d'articles de la nacelle à la palette. Ce transfert est réalisé par retour horizontal de la nacelle et non entraînement du poussoir qui forme ainsi butée fixe pour la couche d'articles.

Le schéma i montre l'étape de retour vertical simultané de la nacelle et du poussoir au niveau du poste d'entrée.

Le schéma j montre l'étape de retour horizontal du poussoir en position initiale donnée par le schéma a.

Les étapes selon les schémas b à j sont répétitives, autant de fois qu'il y a de couches dans la charge palettisée, à l'exception des étapes selon les schémas i et j lorsque la charge palettisée est entièrement confectionnée. Pour la dépose de chaque nouvelle couche, le transfert vertical simultané de la nacelle et du poussoir s'effectue pour les amener au niveau de la couche qui vient d'être déposée sur la charge palettisée en cours de confection.

Le schéma k montre l'étape finale pour laquelle la charge palettisée est entièrement confectionnée. Dans cette étape finale, la nacelle reste à son niveau de dépose de la dernière couche, le poussoir est ramené en position arrière mais reste au niveau vertical de la dépose précédente.

Cette étape finale autorise le transfert de la charge palettisée confectionnée et le remplacement de la palette chargée évacuée par une nouvelle palette vide.

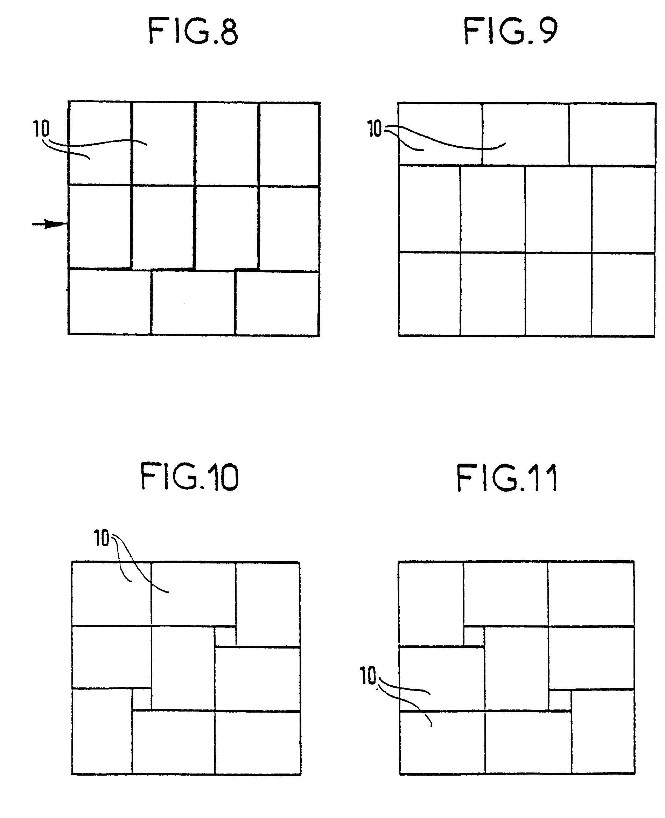

Dans les figures 8 à 11 on a illustré différents exemples d'imbrication des articles 10 au niveau de chaque couche, réalisée à partir d'une composition de rangées effectuée de manière connue en amont du poste d'entrée du palettiseur. Les couches comportent plusieurs rangées d'articles qui s'imbriquent.

Les figures 8 et 9 représentent une couche paire et une couche impaire d'une charge palettisée. Les figures 10 et 11 donnent un autre exemple de couche paire et de couche impaire. L'organisation des rangées est due aux caractéristiques dimensionnelles des articles. Les courses de poussée variables du poussoir évitent tout risque d'accrochage des articles au cours de la constitution de la couche sur la nacelle.

En regard du mode de réalisation illustré, on précise que:

— pour les charges palettisées possibles:

- la hauteur maximale peut atteindre 1600 mm, palette comprise,

- la palette peut varier de 600 x 800 à 1200 x 1200 mm,

- le poids de la charge peut atteindre 1500 kg,

- le poids d'une couche peut être de 300 kg,

— pour les articles:

- le poids individuel peut être de 2 à 30 kg

- la longueur de 160 à 600 mm,

- la largeur de 120 à 400 mm,

- la hauteur de 80 à 900 mm

— pour le niveau du poste d'entrée:

- son niveau est réglable entre 500 et 800 mm par rapport au sol,

— pour le niveau des palettes vides:

- ce niveau est variable entre 100 et 400 mm par rapport au sol.

L'invention a été décrite en regard du mode de réalisation illustré. Il est évident qu'il est possible d'y apporter des modifications de détail et/ou remplacer certains moyens par d'autres équivalents et de lui adjoindre des dispositifs supplémentaires de type connu au niveau de son poste d'entrée sans pour autant sortir du cadre de l'invention telle que définie dans les revendications.

## Revendications

1. Palettiseur pour confectionner sur une palette une charge à plusieurs couches d'articles, lesdits articles arrivant agencés selon des rangées successives de composition de chaque couche à un poste d'entrée (1), comportant un bâti vertical portant un cadre horizontal allongé monté mobile verticalement sur ledit bâti, une surface de chargement, dite nacelle (4), destinée à recevoir une couche d'articles, portée par ledit cadre et montée mobile horizontalement selon la longueur dudit cadre entre ledit poste d'entrée et ladite palette, des premiers moyens d'entraînement en translation verticale dudit cadre et des seconds moyens d'entraînement en translation horizontale de ladite nacelle, pour le positionnement de la nacelle à charger à proximité du poste d'entrée et le positionnement de la nacelle à décharger au-dessus de la palette, et comportant, en outre, des premiers moyens de transfert des articles du poste d'entrée sur la nacelle et des seconds moyens de transfert de la couche d'articles de la nacelle sur la palette, ledit palettiseur étant caractérisé en ce que lesdits premiers et seconds moyens de transfert sont constitués par un poussoir unique (3) porté par ledit cadre horizontale (2) et ainsi rendu solidaire en translation verticale de la nacelle (4) et monté mobile en translation horizontale selon la longueur dudit cadre et en ce qu'il comporte, en outre, des troisièmes moyens d'entraînement en translation horizontale (35, 38) dudit poussoir, qui sont propres, commandés pour que le poussoir (3), d'une part, balaye au moins ledit poste d'entrée (1) lors du chargement de la nacelle et d'autre part forme butée de retenue lors du déchargement de la nacelle.

2. Palettiseur selon la revendication 1, caractérisé en ce que ladite nacelle (4) et ledit poussoir (3) coulissent entre deux branches profilées en U à ailes rentrantes du cadre horizontal (2), le poussoir portant sur les ailes intérieures et la nacelle sur les ailes extérieures desdites branches (11).

3. Palettiseur selon l'une des revendications 1 et 2, caractérisé en ce que lesdits troisièmes moyens d'entraînement sont à course variable et programmée.

**Patentansprüche**

1. Palettenstapelanlage zum Zusammenstellen einer Ladung aus mehreren Lagen von Artikeln auf einer Palette, wobei Artikel entsprechend den aufeinanderfolgenden Aufbaureihen jeder Lage geordnet an einer Eingangsstation (1) ankommen, wobei die Anlage ein senkrechtes Gestell (5), das einen länglichen, waagrechten und in der Senkrechten beweglich im Gestell montierten Rahmen (2) trägt, eine Ladefläche, Bühne (4) genannt, die zur Aufnahme einer Artikellage bestimmt, von dem genannten Rahmen getragen und entsprechend der Länge des Rahmens zwischen der Eingangsstation und der Palette beweglich in der Waagrechten montiert ist, erste Mittel zur Parallelverschiebung des Rahmens in der Senkrechten und zweite Mittel zur Parallelverschiebung der Bühne in der Waagrechten aufweist, um die zu beladende Bühne in der Nähe der Eingangsstation und die zu entladende Bühne oberhalb der Palette in Stellung zu bringen, und daß weiter erste Mittel zur Überführung der Artikel von der Eingangsstation auf die Bühne und zweite Mittel zur Überführung der Artikellage von der Bühne auf die Palette vorgesehen sind, dadurch gekennzeichnet, daß die ersten und zweiten Überführungsmittel aus einer einzelnen Stoßvorrichtung (3) bestehen, die von dem waagrechten Rahmen (2) getragen und somit bei der Parallelverschiebung der Bühne (4) in der Senkrechten mit dieser fest verbunden ist, aber in Bezug auf die Verstellung entsprechend der Länge des Rahmens in der Waagrechten beweglich montiert ist, und daß die Anlage weiter dritte Mittel (35, 38) zur waagrechten Verstellung der Stoßvorrichtung aufweist, die derart gesteuert werden, daß die Stoßvorrichtung (3) zum einen zumindest die Eingangsstation (1) während der Beladung der Bühne überstreicht, und zum anderen als Rückhalteanschlag bei der Entladung der Bühne wirkt.

2. Palettenstapelanlage nach Anspruch 1, dadurch gekennzeichnet, daß die Bühne (4) und die Stoßvorrichtung (3) zwischen zwei U-förmig profilierten und einwärts gebogene Flanken aufweisenden Schenkeln des waagrechten Rahmens (2) gleiten, wobei die Stoßvorrichtung auf den inneren Flanken und die Bühne auf den äußeren Flanken der Schenkel (11) läuft.

3. Palettenstapelanlage nach einem der Ansprüche 1 und 2, dadurch gekennzeichnet, daß die dritten Verstellmittel einen veränderlichen Laufweg gemäß Programmsteuerung bewirken.

**Claims**

1. A stacker for building up a load comprising a plurality of layers of articles on a pallet, said articles arriving at an inlet station (1) organized in successive rows having the composition of each layer, the stacker comprising a vertical frame (5) carrying an elongate horizontal frame (2) mounted to move vertically on said vertical frame, a loading area or «basket» (4) for receiving a layer of articles and carried by said horizontal frame to move horizontally along the length of said horizontal frame between said inlet station and said pallet, first means for driving said horizontal frame in vertical translation and second drive means for driving said basket in horizontal translation in order to position the basket to be loaded in the proximity of the inlet station, and in order to position the basket to be unloaded over the pallet, and also comprising first transfer means for transferring articles from the inlet station onto the basket and second transfer means for transferring the layer of articles from the basket onto the pallet, said stacker being characterized in that said first and second transfer means are constituted by a single pusher (3) carried by said horizontal frame (2) and thereby constrained to move in vertical translation with the basket (4) and mounted to move in horizontal translation along the length of said horizontal frame, and in that it further includes third drive means (35, 38) for driving said pusher in horizonal translation and which are specific thereto and are controlled so that the pusher (3) firstly at least sweeps said inlet station (1) when loading the basket and secondly constitutes a retaining abutment when unloading the basket.

2. A stacker according to claim 1, characterized in that said basket (4) and said pusher (3) slide between two channel section branches of the horizontal frame (2), said branches having inwardly directed lips, the pusher being supported by the inside lips and the basket being supported by the outside lips of said branches (11).

3. A stacker according to claim 1 or 2, characterized in that said third drive means are programmable variable-stroke means.

FIG.1

# FIG.2

# FIG.3

EP 0 221 408 B1

FIG.4

# FIG.5

# FIG.6

# FIG.7

# FIG.8

# FIG.9

# FIG.10

# FIG.11